# EUROPÄISCHE PATENTANMELDUNG

(11) **EP 1 786 174 A1**
(43) Veröffentlichungstag der Anmeldung: **16.05.2007**
(21) Anmeldenummer: 06122494.5
(22) Anmeldetag: 18.10.2006
(51) Int. Cl.: H04L 29/08, H04L 12/28

(54) **Vorrichtung zum Datenaustausch für ein Kraftfahrzeug**

(30) Priorität: 14.11.2005 DE 102005054134
(71) Anmelder: ROBERT BOSCH GMBH, 70442 Stuttgart (DE)
(72) Erfinder: Flick, Bernd, 31199, Diekholzen (DE); Placke, Lars, 30163, Hannover (DE); Modler, Holger, 31139, Hildesheim (DE); Dahlhoff, Achim, 31141, Hildesheim (DE)

(57) **Zusammenfassung**

Die erfindungsgemäße Vorrichtung für ein Kraftfahrzeug (2) weist eine Luftschnittstelle auf und ist zum Austausch von Daten zwischen dem Kraftfahrzeug (2) und mindestens einer Einrichtung, die eine zweite Luftschnittstelle aufweist, ausgebildet. Dabei erfolgt der Austausch der Daten über die Luftschnittstellen zwischen dem Kraftfahrzeug (2) und der mindestens einen Einrichtung über ein drahtloses Netzwerk (8), insbesondere über ein WLAN.

## Beschreibung

Die Erfindung betrifft eine Vorrichtung zum Datenaustausch für ein Kraftfahrzeug, ein Verfahren zum Austausch von Daten, ein Computerprogramm und ein Computerprogrammprodukt.

### Stand der Technik

Die Übertragung von fahrzeugspezifischen Daten sowie von persönlichen Daten des Fahrzeugführers ist bekannt.

Die Druckschrift DE 101 34 437 A1 beschreibt ein Verfahren zur Übertragung von fahrzeugspezifischen Daten, die über einen stationären Computer, ein tragbares Datengerät oder ein Mobilfunkgerät portabel ausgelagert sind, in ein Kraftfahrzeug. Eine Übertragung von Unterhaltungs- bzw. Entertainmentdaten, wie z.B. Musik und Video, ist hier nicht vorgesehen.

Die Druckschrift DE 199 17 169 A1 betrifft ein Verfahren zur Datenübertragung in ein Mobilfunkendgerät (ME) unter Verwendung des GSM-Netzes. Zur Datenübertragung zwischen einem Personal Computer (PC) in das ME werden hier als Übertragungsmedien IrDA (Infrared Data Association) und Bluetooth genutzt. Dabei können Daten auch in eine Fahrzeuganlage übertragen werden. Voraussetzung hierbei ist jedoch, dass das Mobilfunkendgerät aus dem Kraftfahrzeug entfernt wird, um dieses in die Nähe des Personal Computers zu bringen, um die Daten zwischenspeichern zu können, da eine Reichweite der Übertragungsmedien begrenzt ist. Bei IrDA beträgt die Reichweite höchstens zwei Meter, zudem ist Sichtkontakt notwendig. Bei Bluetooth beträgt die Reichweite ca. 10 Meter, mit speziellen Antennen sind bis zu 100 Meter möglich, jedoch ergeben sich durch Hindernisse, wie z.B. Häuserwände, starke Einschränkungen.

Vor diesem Hintergrund wird eine Vorrichtung mit den Merkmalen des Patentanspruchs 1, ein Verfahren mit den Merkmalen des Patentanspruchs 9, ein Computerprogramm mit den Merkmalen des Patentanspruchs 10 und ein Computerprogrammprodukt mit den Merkmalen des Patentanspruchs 11 vorgestellt.

### Vorteile der Erfindung

Die erfindungsgemäße Vorrichtung für ein Kraftfahrzeug weist eine Luftschnittstelle auf und ist zum Austausch von Daten zwischen dem Kraftfahrzeug und mindestens einer Einrichtung, die eine zweite Luftschnittstelle aufweist, ausgebildet. Dabei erfolgt der Austausch der Daten über die Luftschnittstellen zwischen der Vorrichtung in dem Kraftfahrzeug und der mindestens einen Einrichtung über ein drahtloses Netzwerk.

Weitere Vorteile ergeben sich aus den abhängigen Patentansprüchen.

Die Erfindung betrifft des weiteren ein Verfahren zum Austausch von Daten zwischen einem Kraftfahrzeug, das eine Vorrichtung mit einer ersten Luftschnittstelle aufweist, und mindestens einer Einrichtung, die eine zweite Luftschnittstelle aufweist. Dabei werden die Daten über die Luftschnittstellen zwischen der Vorrichtung in dem Kraftfahrzeug und der mindestens einen Einrichtung über ein drahtloses Netzwerk übertragen.

Das erfindungsgemäße Computerprogramm mit Programmcodemitteln ist dazu ausgebildet, alle Schritte des erfindungsgemäßen Verfahrens durchzuführen, wenn das Computerprogramm auf einem Computer oder einer entsprechenden Recheneinheit, insbesondere der erfindungsgemäßen Vorrichtung, ausgeführt wird.

Das erfindungsgemäße Computerprogrammprodukt mit Programmcodemitteln, die auf einem computerlesbaren Datenträger gespeichert sind, ist dazu vorgesehen, alle Schritte des erfindungsgemäßen Verfahrens durchzuführen, wenn das Computerprogramm auf einem Computer oder einer entsprechenden Recheneinheit, insbesondere der erfindungsgemäßen Vorrichtung, ausgeführt wird.

Mit der Erfindung ist es möglich, Komfortdaten wie z.B. Musik, Videos oder Spiele mittels der Luftschnittstellen über das insbesondere lokale drahtlose Netzwerk (Wireless Local Area Network, WLAN) bzw. ein entsprechendes Funknetz zwischen dem Computer, insbesondere einem Heimcomputer, und dem Kraftfahrzeug direkt und vorzugsweise bidirektional zu übertragen. Hierbei können Luftschnittstellen zur Datenübertragung in dem Kraftfahrzeug in Vorrichtungen, die als Autoradios (AR) oder Fahrerinformationssysteme (FIS) ausgebildet sind, integriert sein. Über das drahtlose lokale Netzwerk sind auch fahrzeugspezifische Daten zu übertragen, die eine Funktion von Fahrzeuggeräten unterstützen können.

Da diese Vorrichtungen mit Luftschnittstellen direkt in Kraftfahrzeugen integriert sind, besteht weiterhin die Möglichkeit einer direkten Kommunikation zwischen Kraftfahrzeugen, die mit derartigen Vorrichtungen ausgestattet sind. Somit ist es möglich, anderen Verkehrsteilnehmern Nachrichten zukommen zu lassen.

Die Reichweite von WLAN beträgt derzeit 300 Meter, mit speziellen Antennen als Luftschnittstellen sind auch größere Reichweiten erreichbar, so dass Einschränkungen durch Hindernisse nicht so stark, wie bspw. bei Bluetooth, ausfallen.

Ein vorzugsweise wechselseitiger bzw. bidirektionaler Austausch von Daten umfasst eine Übertragung und Steuerung insbesondere von Komfortdaten von dem Computer in das Kraftfahrzeug und umgekehrt, wenn sich die Luftschnittstelle des Kraftfahrzeugs in dem Empfangsbereich des drahtlosen Netzwerks, das über die Luftschnittstelle des Computers bereitgestellt ist, befindet. Die direkte Kommunikation von Kraftfahrzeug zu Kraftfahrzeug ist möglich, wenn sich die Luftschnittstellen der in den Kraftfahrzeugen angeordneten Vorrichtungen überschneiden, somit können mehrere Vorrichtungen in Kraftfahrzeugen ein drahtloses Netzwerk bilden.

Vorteile für Nutzer ergeben sich dadurch, dass im Kraftfahrzeug gewünschte Daten bequem am Computer ausgewählt und gezielt in das Kraftfahrzeug geladen werden können. Eine Verwendung von zusätzlicher Hardware in Form von z.B. Speicherkarten, PDAs oder Mobilfunkendgeräten (ME) zur Zwischenspeicherung und zum Transport der Daten von dem Computer in das Kraftfahrzeug ist nicht erforderlich. Somit wird eine Fehleranfälligkeit während der Übertragung gesenkt und es werden zusätzliche Gerätekosten und Schnittstellen (Home-PDA und PDA-Fahrzeug), die für viele Geräte kompatibel sein müssen, vermieden.

Die zu übertragenden Daten können am Computer mit aktueller Antivirensoftware untersucht werden, um sicherzustellen, dass diese Daten im Kraftfahrzeug keinen Schaden anrichten. Große Datenmengen, wie z.B. Video-, Audio- und Programmdateien, können kostenneutral auf ein in der Vorrichtung vorhandenes großes Speichermedium geladen und genutzt werden, da WLAN ein lizenzfreies und kostenneutrales Übertragungsmedium ist. Das Laden der Daten von dem Computer in die Vorrichtung in dem Kraftfahrzeug kann bei abgestelltem Kraftfahrzeug über Nacht erfolgen.

Die Menge der zu übertragenden Daten wird nicht durch eine Kapazität eines Speicher des Mobilfunkendgeräts beschränkt. Durch die Direktübertragung ist einzig durch die Kapazität der Vorrichtung eine Begrenzung gegeben. Außerdem muss der Nutzer zum Übertragen von Daten seine Wohnung nicht verlassen.

Die direkte kostenneutrale Kommunikation von Kraftfahrzeug zu Kraftfahrzeug ist mit Hilfe der in den Vorrichtungen integrierten Luft- bzw. Übertragungsschnittstelle möglich. Voraussetzung ist hierbei, dass beide Kraftfahrzeuge hierzu bereit sind und einen Empfangskanal freigeschaltet haben. Nachrichten und Daten können dann über eine vom Hersteller bereitgestellte Kommunikationsplattform der Luftschnittstelle in jeweils einer Vorrichtung von einem Kraftfahrzeug zum nächsten übertragen werden.

Es ergibt sich hierbei die Möglichkeit zur Übertragung von Verkehrsleitinformationen, wie bspw. "stehe gerade im Stau" oder "Achtung - Fahrbahn hier rutschig". Diese können dazu genutzt werden, andere Verkehrsteilnehmer in unmittelbarer Umgebung zu warnen.

Die Vorrichtung in dem Kraftfahrzeug kann zum Abspielen von MP3s, Videos oder zum Spielen, also als Autoradio bzw. Fahrerinformationssystem mit integrierte Luftschnittstelle zur Datenübertragung ausgebildet sein. Damit im Kraftfahrzeug jeweils aktuelle Daten zur Verfügung stehen, sollen mittels der Luftschnittstelle Dateninhalte im Kraftfahrzeug über den Computer oder von einem anderen Kraftfahrzeug aus geändert werden können. Hierfür ist Voraussetzung, dass sich die Luftschnittstelle in dem Kraftfahrzeug im Empfangsbereich der Luftschnittstelle des Heimcomputers oder des lokalen drahtlosen Netzwerks befindet und Daten empfangen bzw. senden darf. Eine Erlaubnis zur Datenübertragung kann durch ein geeignetes Authentifizierungs- und/oder Anmeldeverfahren, wie z.B. durch Senden eines Nutzernamens mit Passwort, erfolgen.

### Zeichnung

- Figur 1: zeigt eine erste Ausführungsform zur Durchführung des Verfahrens.
- Figur 2: zeigt eine zweite Ausführungsform zur Durchführung des Verfahrens.

### Detaillierte Beschreibung

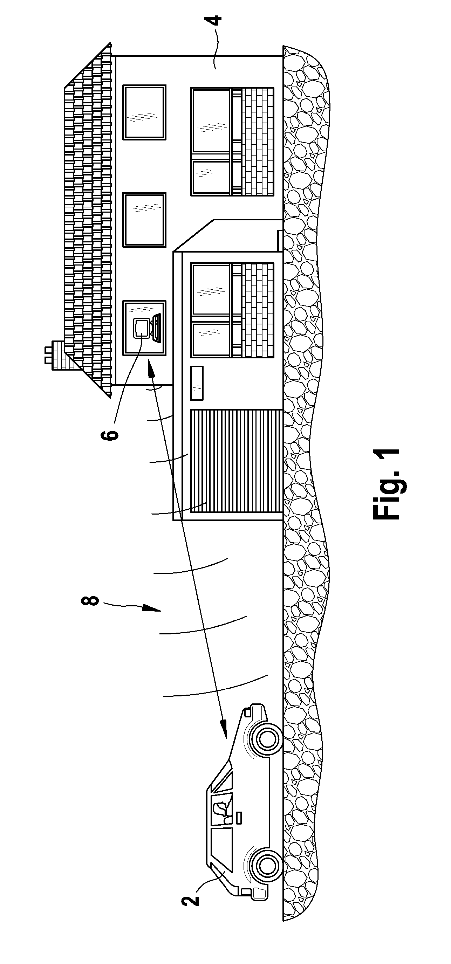

Figur 1 zeigt ein Kraftfahrzeug 2 und ein Haus 4 mit einem Computer 6, der eine Luftschnittstelle für ein drahtloses lokales Netzwerk 8 und einen Internetanschluss aufweist. Ein Nutzer hat somit die Möglichkeit, mit dem Computer 6 beliebige Daten, wie bspw. Videos, MP3s oder Anwendungsdateien, für das Kraftfahrzeug 2 aus dem Internet herunterzuladen und auf dem Computer 6 zu speichern. Die heruntergeladenen Daten können mit Antivirensoftware überprüft und/oder mit geeigneten Werkzeugen (Tools) weiter bearbeitet werden. Danach baut der Nutzer eine WLAN-Verbindung als drahtloses lokales Netzwerk 8 zu einer im Kraftfahrzeug 2 angeordneten Vorrichtung, die eine für das Netzwerk 8 kompatible Luftschnittstelle aufweist, auf und überträgt die Daten.

Um hierbei einem Missbrauch Dritter vorzubeugen, muss vorher ein geeignetes Authentifizierungsverfahren, wie z.B. eine Abfrage von Nutzername und Passwort, durchlaufen werden. Nach dem Übertragen der Daten können diese im Kraftfahrzeug 2 genutzt werden. Weiterhin besteht die Möglichkeit, dass die Vorrichtung eine Aufnahmefunktion für Musik und Sprachnachrichten besitzt. Die Daten können auf einem zugehörigen Datenspeicher der Vorrichtung gespeichert werden und vom Kraftfahrzeug 2 aus über die Luftschnittstelle zur weiteren Bearbeitung oder Archivierung an den Computer 6 gesendet werden.

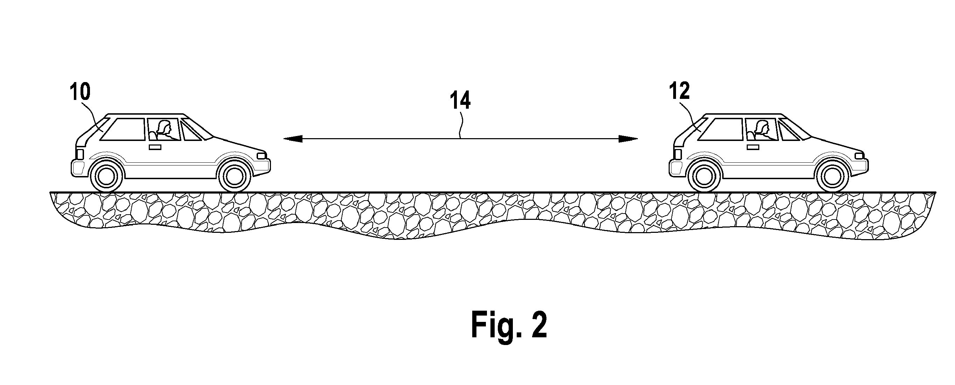

Figur 2 zeigt ein erstes und ein zweites Kraftfahrzeug 10, 12 mit jeweils einer erfindungsgemäßen Vorrichtung mit kompatibler Luftschnittstelle. Die Kraftfahrzeuge 10, 12 fahren hier hintereinander her, z.B. bei einer Kolonnenfahrt mit aktiviertem Adaptive Cruise Control ACC, oder stehen gemeinsam auf einem Parkplatz. Beide Kraftfahrzeuge 10, 12 haben sich gegenseitig authentifiziert, über ein drahtloses lokales Netzwerk 14 (WLAN) eine Datenverbindung zueinander aufgebaut, und können nun Daten oder Nachrichten austauschen. Dieses kann über eine in der jeweiligen Vorrichtung integrierte Kommunikationseinheit geschehen, die bspw. Sprachnachrichten in Text umwandelt und über die Luftschnittstelle an das jeweils andere Kraftfahrzeug 10, 12 sendet. Hier wird über eine geeignete Kommunikationsplattform der Text wieder in Sprache gewandelt und bspw. dem Fahrer vom System vorgelesen. Die Antwort erfolgt in umgekehrter Reihenfolge. Weiterhin können so Daten, wie z.B. MP3-Dateien, zwischen den Kraftfahrzeugen 10, 12 ausgetauscht werden.

Mit dem drahtlosen lokalen Netzwerk 8 ist es möglich, Komfortdaten von dem Computer 6 im Haus 4 über die Luftschnittstellen zu der Vorrichtung in das Kraftfahrzeug 2 zu übertragen. Des weiteren ist über das drahtlose lokale Netzwerk 14 mittels der Luftschnittstellen eine Kommunikation zwischen Vorrichtungen in Kraftfahrzeugen 10, 12 möglich.

## Patentansprüche

1. Vorrichtung für ein Kraftfahrzeug (2, 10, 12), die eine Luftschnittstelle aufweist und zum Austausch von Daten zwischen dem Kraftfahrzeug (2, 10, 12) und mindestens einer Einrichtung, die eine zweite Luftschnittstelle aufweist, ausgebildet ist, wobei der Austausch der Daten über die Luftschnittstellen zwischen dem Kraftfahrzeug (2, 10, 12) und der mindestens einen Einrichtung über ein drahtloses Netzwerk (8, 14) erfolgt.

2. Vorrichtung nach Anspruch 1, die dazu ausgebildet ist, die Daten über ein drahtloses lokales Netzwerk (WLAN) (8, 14) auszutauschen.

3. Vorrichtung nach Anspruch 1 oder 2, die dazu ausgebildet ist, die Daten mit der Einrichtung bidirektional auszutauschen.

4. Vorrichtung nach einem der voranstehenden Ansprüche, die dazu ausgebildet ist, Daten mit mindestens einem Computer (6) auszutauschen.

5. Vorrichtung nach einem der voranstehenden Ansprüche, die dazu ausgebildet ist, Daten mit mindestens einer zweiten Vorrichtung in einem weiteren Kraftfahrzeug (2, 10, 12) auszutauschen.

6. Vorrichtung nach einem der voranstehenden Ansprüche, die dazu ausgebildet ist, den Austausch von Daten zu steuern.

7. Vorrichtung nach einem der voranstehenden Ansprüche, die dazu ausgebildet ist, vor dem Austausch der Daten ein Authentifizierungsverfahren durchzuführen.

8. Vorrichtung nach einem der voranstehenden Ansprüche, die in einem Autoradio integriert ist.

9. Verfahren zum Austausch von Daten zwischen einem Kraftfahrzeug (2, 10, 12), das eine Vorrichtung mit einer ersten Luftschnittstelle aufweist, und mindestens einer Einrichtung, die eine zweite Luftschnittstelle aufweist, bei dem die Daten über die Luftschnittstellen zwischen dem Kraftfahrzeug (2, 10, 12) und der mindestens einen Einrichtung über ein drahtloses Netzwerk (8, 14) übertragen werden.

10. Computerprogramm mit Programmcodemitteln, um alle Schritte eines Verfahrens nach Anspruch 9 durchzuführen, wenn das Computerprogramm auf einem Computer oder einer entsprechenden Recheneinheit, insbesondere einer Vorrichtung nach einem der Ansprüche 1 bis 8, ausgeführt wird.

11. Computerprogrammprodukt mit Programmcodemitteln, die auf einem computerlesbaren Datenträger gespeichert sind, um alle Schritte eines Verfahrens nach Anspruch 9 durchzuführen, wenn das Computerprogramm auf einem Computer oder einer entsprechenden Recheneinheit, insbesondere einer Vorrichtung nach einem der Ansprüche 1 bis 8, ausgeführt wird.
